# EUROPEAN PATENT APPLICATION

(11) **EP 1 304 622 A1**
(43) Date of publication of application: **23.04.2003**
(21) Application number: 01947873.4
(22) Date of filing: 06.07.2001
(51) Int. Cl.: G06F 12/14, G06F 17/60

(54) **METHOD AND SYSTEM FOR CONTROLLING CONTENT CIRCULATION SYSTEM**

(30) Priority: 11.07.2000 JP 2000209406; 29.08.2000 JP 2000258650; 20.10.2000 JP 2000320597
(71) Applicant: MATSUSHITA ELECTRIC INDUSTRIAL CO., LTD., Kadoma-shi, Osaka 571-8501 (JP)
(72) Inventor: SENOH, Takanori, Hirakata-shi, Osaka 573-0093 (JP); KOGURE, Takuyo, Neyagawa-shi, Osaka 572-0020 (JP)
(74) Representative: Eisenführ, Speiser & Partner
(86) International application number: JP0105870
(87) International publication number: WO02005099

(57) **Abstract**

In order to prevent distribution of an illegal copy of the content in the electronic distribution system, the method for controlling the distribution of content over the telecommunication network comprises steps of: adding apparatus identification information for identifying an apparatus by which the content is recorded and content identification information containing an identification code for identifying the content, to the content; transmitting the content to the telecommunication network; receiving at least one part of the content containing the apparatus identification information and the identification code over the telecommunication network; extracting the apparatus identification information and the identification code from the received at least one part of the content; judging whether the content is a legal copy or an illegal copy based on the apparatus identification information and the identification code extracted; and stopping reception and playback of the content when the content is judged an illegal copy.

## Description

### TECHNICAL FIELD

The present invention relates to control of electronic distribution system for distributing multimedia content such as digitized image, voice over network. More specifically, the invention relates to prevention of illegal copying of content in the electronic distribution system.

### BACKGROUND ART

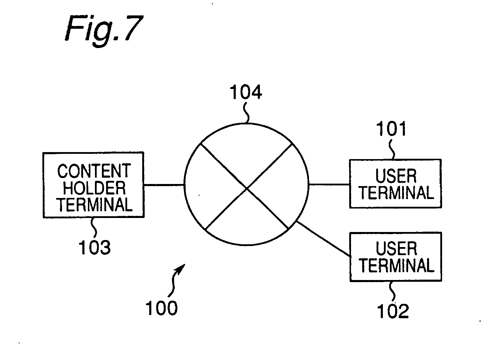

Fig. 7 shows a conventional electronic distribution system 100. Electronic distribution system 100 includes a plurality of user terminals 101, 102 and a content holder terminal 103. The plurality of user terminals 101, 102 and content holder terminal 103 are respectively connected to network 104 such as Internet, and can communicate each another.

Conventionally, in distributing content by use of electronic distribution system 100, the content holder publishes a content catalog in his/her own Web site to collect subscribers, determines legality of a subscriber by confirming a credit card number of the subscriber, and transmits and distributes the content.

To be more specific, the content holder discloses the content subject to distribution, and releases it to network 104. The disclosure is carried out by publishing content outline, price, etc. as a catalog on the Web site set up at content holder terminal 103. The user at user terminal 101 who hopes to acquire the content accesses the Web site where the desired content exists through the search engine site, etc. from user terminal 101 connected to network 104 or by the Web site address published on magazines, etc. When the outline, price, etc. of the content from the catalog published on the Web site match the desired conditions, the user transmits the number of a credit card which the user possesses to content holder terminal 103. If the credit card number is confirmed valid by the content holder, the content is transmitted to the user terminal 101 via content holder terminal 103.

The above-mentioned technique is disclosed in U. S. Patent No. 6,055,513, "Method and Apparatus for Intelligent Selection of Goods and Services in Telephonic and Electronic Commerce" .

However, the above-mentioned electronic distribution system 100 has a problem in that illegal copy of contents cannot be prevented. For example, it is unable to prevent the fraudulent act of the user of user terminal 101 from posting the purchased content on his/her own Web site without being approved by the content holder and allowing any third party (for example, user of user terminal 102) to copy the content with or free of charge, the original content holder cannot prevent such fraudulent act. Under such circumstances, the content producer and its legal holder suffer from marked loss.

It is an object of the present invention to prevent from distributing illegal copy of a content in the electronic distribution system.

### DISCLOSURE OF INVENTION

A method for controlling distribution of content over the telecommunication network according to the present invention includes: adding apparatus identification information for identifying an apparatus by which the content is recorded and content identification information containing an identification code for identifying the content, to the content; transmitting the content to the telecommunication network; receiving at least one part of the content containing the apparatus identification information and the identification code over the telecommunication network; extracting the apparatus identification information and the identification code from the received at least one part of the content; judging whether the content is a legal copy or an illegal copy based on the apparatus identification information and the identification code extracted; and stopping reception and playback of the content when the content is judged an illegal copy. Therefore, the above object can be achieved.

The judging judges whether the content is a legal copy or an illegal copy on the basis of the combination of the apparatus identification information and identification code extracted.

The method further includes receiving the apparatus identification information and identification code in advance, wherein the judging judges that the content is legal copy when an combination of the apparatus identification information and the identification code received in advance is the same as an combination of the apparatus identification information and the identification code extracted, and judges an illegal copy when the combinations are different.

The method further includes posting the received at least one part of the content on the electronic bulletin board to disclose, when the content is judged to be an legal copy by the judging.

The content identification information further contains information for specifying a sender of the content, and the method further comprising requiring reception of the disclosed content on the basis of the information for specifying the sender.

The method further includes: creating the content; and creating the identification code for uniquely identifying the content, wherein the adding adds the identification information and the created identification code, to the content as electronic watermark information.

The adding adds the identification information and the created identification code encoded in advance, to the content as electronic watermark information.

A content distribution control system over a telecommunication network according to the present invention includes: an identification information adder which adds, to the content, apparatus identification information for identifying an apparatus by which the content is recorded and content identification information containing an identification code for identifying the content to transmit to the telecommunication network; an identification information extractor which receives at least one part of the content containing the apparatus identification information and the identification code from the identification information adder over the telecommunication network and extracts the apparatus identification information and identification code; and a legality judging section which judges whether the content is a legal copy or an illegal copy on the basis of the apparatus identification information and identification code extracted by the identification information extractor, said legality judging section stopping reception and playback of the content when judging an illegal copy. Accordingly, the above object is achieved.

The legality judging section judges whether the content is a legal copy or an illegal copy on the basis of the combination of the apparatus identification information and identification code extracted by the identification information extractor.

The identification information adder transmits the apparatus identification information and the identification code of the content in advance before the at least one part of the content is transmitted, wherein the identification information extractor receives the apparatus identification information and the identification code transmitted from the identification information adder, and wherein the legality judging section judges that the content is an legal copy when an combination of the apparatus identification information and the identification code received by the identification information extractor is the same as an combination of the identification code and the apparatus identification information later extracted by the identification information extractor, and judges that the content is an illegal copy when the combinations are different.

The content distribution control system further includes an electronic bulletin board which discloses the at least one part of the content when the legality judging section judges the content to be an legal copy.

The content identification information further contains information for specifying a sender of the content, and the system further comprising a user terminal which requires reception of the content disclosed in the bulletin board on the basis of the information for specifying the sender.

The content distribution control system further includes: a creating section which creates the content; and an identification code creating section which creates the identification code that uniquely identifies the content, wherein the identification information adder adds the identification information and the identification code created by the identification code creating section, to the content as electronic watermark information.

The identification information adder adds the identification information and the created identification. code encoded in advance, to the content as electronic watermark information.

A computer-executable program for controlling content distribution according to the present invention includes: receiving apparatus identification information for identifying an apparatus by which the content is recorded and identification code for identifying the content; extracting the apparatus identification information and the identification code from the received content;
judging whether the content is a legal copy or an illegal copy based on the apparatus identification information and the identification code extracted; and stopping reception and playback of the content when the content is judged an illegal copy. Therefore, the above object is achieved.

The judging judges whether the content is a legal copy or an illegal copy on the basis of the combination of the apparatus identification information and identification code extracted.

The computer-executable program further includes receiving the apparatus identification information and identification code in advance, wherein the judging judges that the content is legal copy when an combination of the apparatus identification information and the identification code received in advance is the same as an combination of the apparatus identification information and the identification code extracted, and judges an illegal copy when the combinations are different.

The computer-executable program further includes posting the received at least one part of the content on the electronic bulletin board to disclose, when the content is judged to be an legal copy by the judging.

The extracting decodes and extracts the apparatus identification information and the identification code when the apparatus identification information and the identification code are encoded.

The computer-executable program is recorded in a recording medium. Therefore, the above object is achieved.

By the method for controlling the content distribution system as described above, the distribution of the content illegally copied can be prevented.

### BRIEF DESCRIPTION OF DRAWINGS

Fig. 1 is a diagram of a configuration of a content distribution system according to the first embodiment;
Fig. 2 is a block diagram of a specific configuration of a content distribution system;
Fig. 3 is a diagram of an example of content identification information;
Fig. 4 is a diagram of an example of a catalog composed of a plurality of catalog data;
Fig. 5 is a diagram of an example of an identification information table;
Fig. 6 is a block diagram of a content distribution system according to the second embodiment; and
Fig. 7 is a diagram of a conventional electronic distribution system.

### BEST MODE FOR CARRYING OUT THE INVENTION

Referring now to the attached drawings, the first and the second embodiments according to the present invention will be described. The component elements designated by like reference characters should possess the same functions throughout the several views.

### (First Embodiment)

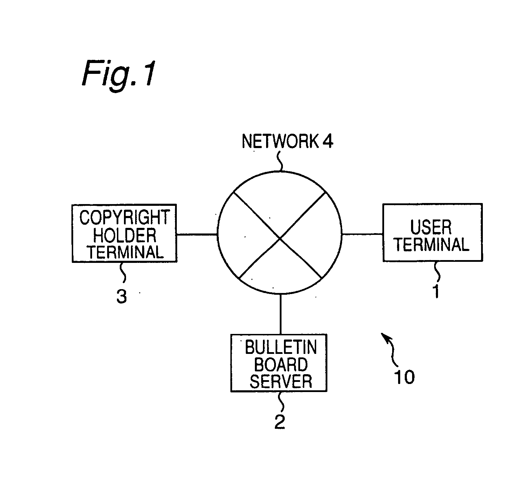

Fig. 1 is a diagram showing a configuration of content distribution system 10 of the first embodiment. Content distribution system 10 includes a user terminal 1, bulletin board server 2, and a user terminal 3. User terminal 1, bulletin board server 2, and copyright holder terminal 3 are respectively connected to telecommunication network 4 such as Internet, and can communicate one another. In content distribution system 10 according to the present embodiment, copyright holder terminal 3 discloses the content subject. to distribution (i.e. sales) in bulletin board server 2. On the other hand, the user can purchase the disclosed content by perusing bulletin board server 2. In the figure, only one user terminal 1 is shown, but needless to say, a plurality of user terminals may exist.

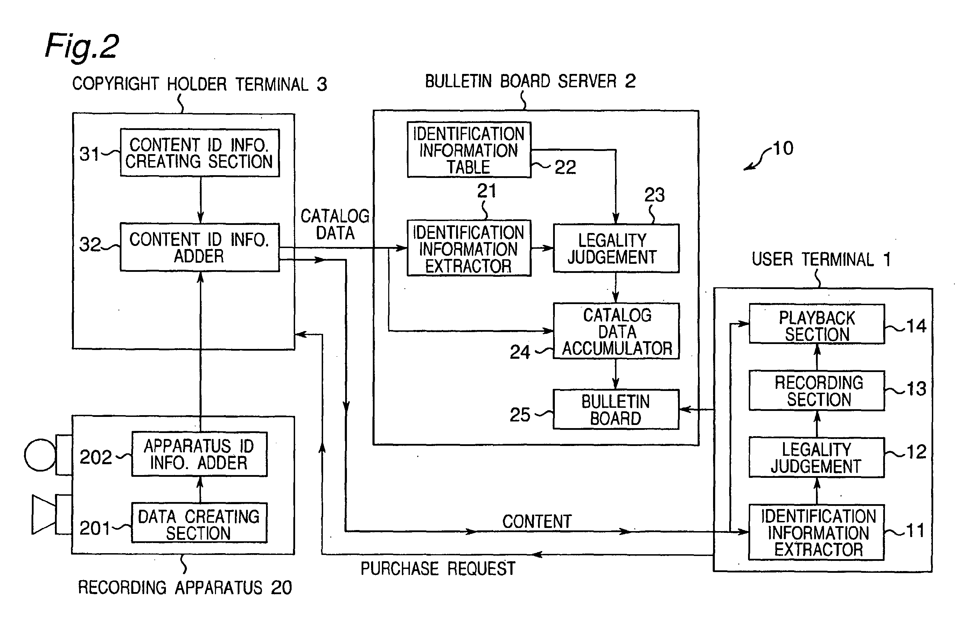

Referring now to Fig. 2, further specific configuration of the embodiment will be described. Fig. 2 is a block diagram showing the specific configuration of content distribution system 10. For convenience of the explanation, the illustration of communication network 4 is omitted. Now the description will be made along with the data flow.

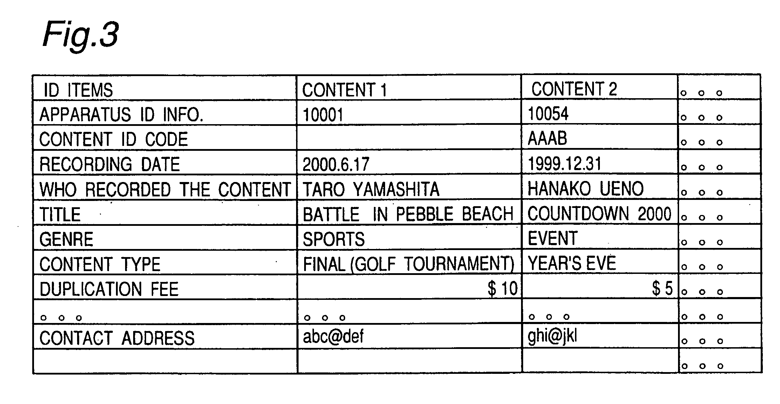

First of all, the content producer produces the multimedia content such as image, voice, etc. digitized by using recording apparatus 20. The content may be images alone or may be voices alone. Recording apparatus 20 is, for example, a video camera, but it may be an editing apparatus for editing and recording the content in the recording medium. Recording apparatus 20 includes data creating section 201 for creating the content and recording in a specified recording medium and an apparatus identification information adder 202 for adding identification information of the recording apparatus (hereinafter called the "apparatus identification information") to the content created at data creating section 201. The apparatus identification information can identify the apparatus by which the content is recorded as the digital data in the recording medium. A specific (unique) value is given to each of all recording apparatuses as the apparatus identification information, e.g. "10001" (later discussed referring to Fig. 3).

Apparatus identification information adder 202 records the apparatus . identification information together with the content in the recording medium as a part of the information for identifying the created content. The apparatus identification information of recording apparatus 20 is uniquely assigned by each of manufacturing companies who manufactures the recording apparatus. However, in order to identify the recording apparatus throughout the world, a universal assigning institution may assign identification information of individual manufacturing company. Each manufacturing company gives the specific identification information for each of their product following the company's identification information. The identification information has sufficient data length to individually identify all the recording apparatus. Furthermore, based on the identification information, it is possible to specify whether recording apparatus 20 (Fig. 2) is for general users or for commercial users. The content with the identification information 10001 of the recording apparatus added by apparatus identification information adder 202 is sent to copyright holder terminal 3.

Copyright holder terminal 3 is a computer terminal of the content producer, that is, the copyright holder. Copyright holder terminal 3 includes content identification information creating section 31 and content identification information adder 32.

The content identification information creating section 31 performs specified operation(s) to create the content identification information. Fig. 3 shows an example of the content identification information. As shown in Fig. 3, the content identification information is the information that prescribes content identification code, date of recording content, name of the recording person, title, genre, details, copy price, contact address for purchasing, etc., and one specific value is assigned for one content without fail. Consequently, at content identification information creating section 31, the content identification information is created using not only the date when the content is produced but also hour, minute, and second, and even millisecond as parameters. With respect to the content identification code, when the content is for commercial purpose, which is produced by the content producing company such as movie studios, etc., a specific value is given. In the figure, the content identification code of content 2 is given as AAAB. As discussed later, based on at least the content identification code and the apparatus identification information, it is possible to determine whether the content is an illegal copy or legal copy. On the other hand, the name of recording person and title, and other information can be obtained on the basis of the entry of the producer. Because the content identification information is further added to the content with the apparatus identification information added by content identification information adder 32 (Fig. 2), the apparatus identification information is explained herein as to be included in the content identification information.

Referring now to Fig. 2 again, content identification information adder 32 embeds the content identification information created by content identification information creating section 31 in the content received from recording apparatus' 20 as electronic watermark information. Features of the electronic watermark information are as follows: the electronic watermark information is not erased even when the production (image or voice) is modified, compressed, or expanded; the electronic watermark information is embedded to the extent that human cannot detect by his eyes or ears; and the quality of the original production can be maintained even when the electronic watermark information is embedded. According to these features, the content identification information becomes integral with and inseparable from the content, illegal alteration of the content identification information can be prevented and as a result, the playback control and recording control can be achieved.

For the electronic watermark embedding, various kinds of methods can be utilized. For one example, it is embedded by being generated as random numbers and added to the specific frequency component of the content. Specifically, assume that ai denotes the specific frequency component of the content to which the electronic watermark is inserted, ci a random number which takes the value of +1 or -1, and xi a value of the content identification information as the electronic watermark. Signal with inserted electronic watermark information is expressed by

ai + xi * ci Eq.(1).

In the aforementioned description, the content identification code ("AAAB" of Fig. 3) is issued by copyright holder terminal 3 and is a part of the content identification information. However, it may be issued by universal identification code assigning institution. According to this, the unique content identification code can be obtained without fail.

As described above, the content with the content identification information superimposed as the electronic watermark information is completed. Note that, when the content identification information is superimposed on the content from recording apparatus 20 as electronic watermark information, the relevant content identification information encoded in advance can be used. In such event, the value of xi of Eq. (1) above may be a value of the encoded content identification information. Such encoding can be performed by content identification, information creating section 31 or content identification information adder 32. By using the encoded content identification information for the electronic watermark information, decoding of the content identification information by illegal users can be made difficult and the copyright can be more securely protected. Thereafter, copyright holder terminal 3 transmits the catalog data concerning the content to bulletin board server 2 for broadly marketing the created content.

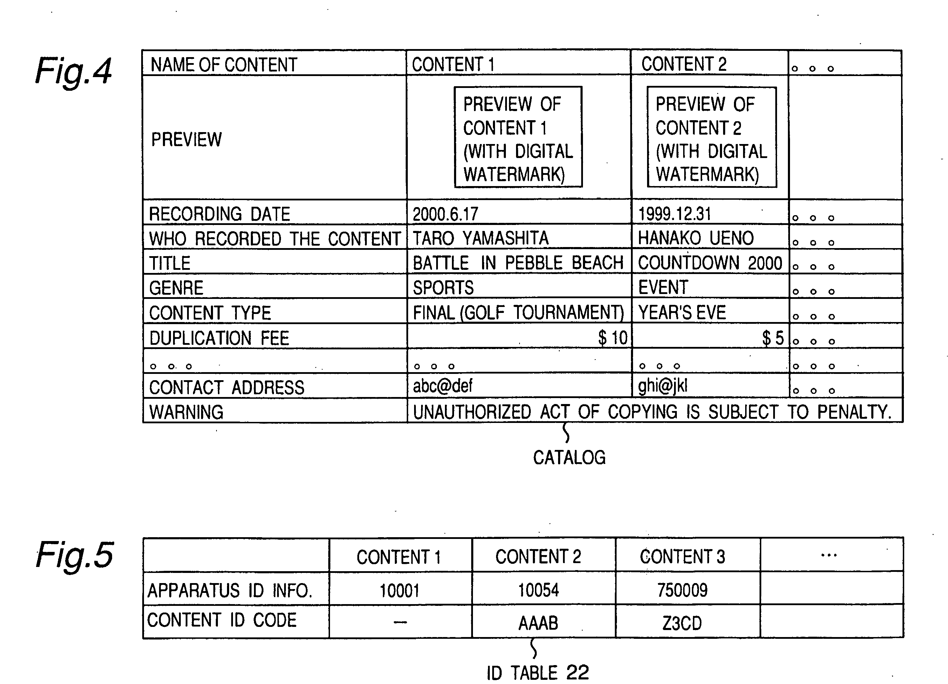

Referring now to Fig. 2 again, bulletin board server 2 is a server computer on the network to which a plurality of catalog data is registered as a catalog. The catalog data includes a preview of extracted highlighted portion of the content, warning to prohibit copying, title, details, price, contact address for purchasing, etc. In the case of music content, the music of the specified time duration is extracted in place of the preview, thereby enabling the potential users to trially listen. The warning to prohibit copy, etc. will be displayed in the same manner. Fig. 4 is the diagram showing an example of the catalog composed of a plurality of catalog data. The catalog is posted on the common bulletin board provided on the network. The user can select various contents by accessing the bulletin board opened on the bulletin board server 2 and perusing the catalog. It must be noted that the preview display data extracted from the content contains the content identification information.

Now, the configuration of bulletin board server 2 will be specifically described. Bulletin board server 2 includes identification information extractor 21, identification information table 22, legality judgement 23, catalog data accumulator 24, and bulletin board 25. Identification information extractor 21 extracts the identification information added to the content of the preview portion of the catalog data. The identification information referred herein corresponds to the apparatus identification information ("10001," "10054" of Fig. 4) and the content identification code ("ARAB" of Fig. 4), and is the electronic watermark information added to the specific frequency component in the form of random numbers.

The specific extraction technique is described as follows. First of all, the frequency component to which the identification information is embedded is extracted through the same band pass filter used for inserting the watermark into the content. The same random number used for the insertion is multiplied to the frequency component and is allowed to pass the filter for taking out only its dc component. As described in relation to Eq. (1), when ai denotes the specific frequency component of the content to which the electronic watermark is inserted, ci the random number which takes the value or +1 or -1, and xi the value of the content identification information to become the electronic watermark, the signal with the electronic watermark information inserted is expressed as ai + xi * ci. Consequently, the value after the identification information extractor 21 is multiplied by the random number ci is given by

(ai + xi * ci) * ci = ai * ci + xi * (ci^2) Eq.(2).

The random number ci is transmitted only to bulletin board server 2 and the user terminal of the legal user using the cryptography method such as public key cryptography, etc. Because the random number ci takes either +1 or -1, the dc component of ai*ci becomes 0, and ci^2 = 1. Consequently, when the signal is passed through a dc component extraction filter, the identification information embedded as the electronic watermark information is extracted, because of (ai + xi * ci) * ci = xi. When the content identification information as the electronic watermark information has been encoded in advance, the key for deciphering the code is further required. This key can be acquired from copyright holder terminal 3. Identification information extractor 21 decodes the content identification information using the key.

Note that the identification information may be encoded into (xi + ci), where ci is a random number that takes either +1 or :1; xi value of the content identification information that must become the electronic watermark. This "+" indicates the exclusive OR arithmetic. Since identification information extractor 21 adds the random number ci to xi + ci, the value becomes

(xi + ci) + ci = xi + (ci + ci) = xi +0 = xi Eq.(3).

As a result, the identification information can be extracted. The random number ci is transmitted only to bulletin board server 2 and the user terminal of the legal user only by way of the public key cryptography, etc. Note that it is allowed to encode or decode by the use of the apparatus identification information, for example, by multiplying the apparatus identification information by the random number.

Identification information table 22 combines and stores the apparatus identification information and content identification code. Fig. 5 shows an example of identification information table 22. The data registered to identification information table 22 is the combination of the apparatus identification information and content identification code of the catalog data transmitted from copyright holder terminal 3 prior to transmitting the catalog data to bulletin board server 2.

Legality judgement 23 of Fig. 2 judges or determines whether the combination of the apparatus identification information and the content identification code extracted by identification information extractor 21 is valid or not. That is, legality judgement 23 compares the combination of them with that stored in identification information table 22. When both combinations are same, legality judgement 23 judges that the content is not an illegal copy. This means that the catalog data transmitted from copyright holder terminal 3 and also the content distributed are the data transmitted from the legal producer. Consequently, if legality judgement 23 judges the combination legal, it permits catalog data accumulator 24 to accumulate the catalog data. Catalog data accumulator 24 stores the catalog data transmitted from copyright holder terminal 3. Thus, distribution of the relevant content is authorized and the catalog of the content is posted on bulletin board 25. On the catalog shown in Fig. 4, content 1 and content 2 are posted.

On the other hand, legality judgement 23 determines based on the following case that the content is an illegal copy, and the relevant catalog data is not posted on bulletin board 25: i.e. in the case the combination of the apparatus identification information and content identification code extracted by identification information extractor 21 differs from the combination of the apparatus identification information and content identification code included in identification information table 22, in the case the content identification is not detected, or in the case legality judgement 23 judges, for example, the recording apparatus identification code 10054 showing the general user recording apparatus while the content identification code AAAB matches the commercial content identification code already registered. This is because there is a high possibility of illegal copy of the already existing commercial content. In such event, notification that the content is posted is presented to the person who wanted to register (for example, to the user of the user terminal, who illegally copied the content). Consequently, the illegally copied content is not posted on bulletin board 2. In order to exercise strict control over the illegal copy, notification may also be presented to the legal copyright holder of the relevant content. Legality judgement 23 may judge the legality (lawfulness) of the identification information by inquiring the universal identification code assigning institution and confirming whether the combination is correct or not.

Now, the description will be made on user terminal 1. User terminal 1 is, for example, a computer (PC) of the user to peruse bulletin board 25 on which the catalog is posted, view or listen to the preview of the content in the content catalog posted on bulletin board 25. If the user desires to purchase a content, the user transmits a request for purchase to the seller of the content, e.g. copyright holder of copyright holder terminal 3 who transmitted the content, by means of the information for identifying the content seller such as an e-mail address showing the contact address. Copyright holder terminal 3 receives the purchase request from user terminal 1 and requires to transmit user's credit card number or electronic money for payment. When the credit card number, etc. is transmitted from the user, then, copyright holder terminal 3 confirms the legality of received credit card number or electronic money, and thereafter, transmits the content desired by the user to user terminal 1. By utilizing the identification information in this way, the distribution of the legal content is achieved.

Now, the configuration of user terminal 1 will be specifically described. User terminal 1 includes an identification information extractor 11, legality judgement 12, recording section 13, and playback section 14. When user terminal 1 starts the reception of the content from copyright holder terminal 3, it reads the identification information embedded in the content by identification information detection function 11. At the time, only a part of the content is received. Legality judgement 12 confirms the legality of the content in the same manner as legality judgement 23 of bulletin board server 2 based on the identification information read.

When judging the content is legal, legality judgement 12 permits recording section 13 to record the content. When the content is recorded, the apparatus identification information of the content identification information is rewritten to the specific number of the user recording apparatus. By being rewritten to the specific number of the user recording apparatus on behalf of the commercial apparatus, the specific information indicating the general user apparatus is added to the commercial content. This can provide a ground for judging whether the content has a high possibility of illegal copy. In addition, the recording time of the content identification information is also rewritten. Thus, even when the user carries out illegal copy and the same content is practically distributed to the market, it is possible to judge that the holder who owns the content of the oldest recording time is the producer.

When the content is judged not legal, e.g. when the received content is assumed to be an illegal copy or when the content identification information is not detected, the reception of the content is stopped. Even after the reception is completed, legality judgement 12 may judge the legality of the content. When the content is judged illegal at the time of playback, legality judgement 12 prevents the content from being reproduced or outputted to the output display apparatus by disabling content playback section 14 for playing back and outputting a content. Consequently, even when the illegally copied content is downloaded to the general user terminal, the copyright can be protected by disabling the content for being displayed and outputted.

According to the first embodiment, determination whether the content is an illegal copy or legal copy is carried out based on the apparatus identification information for identifying the apparatus who has recorded the content and the content identification information containing the content identification code for identifying the content. Even if illegal copying is carried out, it can be easily judged because the apparatus identification information is changed to the value corresponding to the apparatus. In such event, both reception and playback of the content are further stopped, and the distribution of the illegal copy can be prevented. Since the apparatus which carried out illegal copying can be identified, it is possible to find out who illegally copied the content.

The first embodiment is explained. In the first embodiment, the content identification information adder 32 of copyright holder terminal 3 adds the content identification information to the content. However, this operation may be carried out by bulletin board server 2. Copyright holder terminal 3 transmits the content and the content identification information to bulletin board server 2. Note that the content identification information may be acquired or created by bulletin board server 2.

In the first embodiment, the purchase request from user terminal 1 is directly transmitted to copyright holder terminal 3, but may be transmitted to copyright holder terminal 3 via bulletin board server 2. Since copyright holder terminal 3 receives the purchase request only from bulletin board server 2, the management becomes easier.

### (Second Embodiment)

In the first embodiment, apparatus identification information adder 202 (Fig. 2) of recording apparatus 20 adds the apparatus identification information to the content. In the second embodiment, the apparatus identification information is officially registered by the official registration institution, the third party institution. The registered apparatus identification information is added to the content simultaneously with the content identification information.

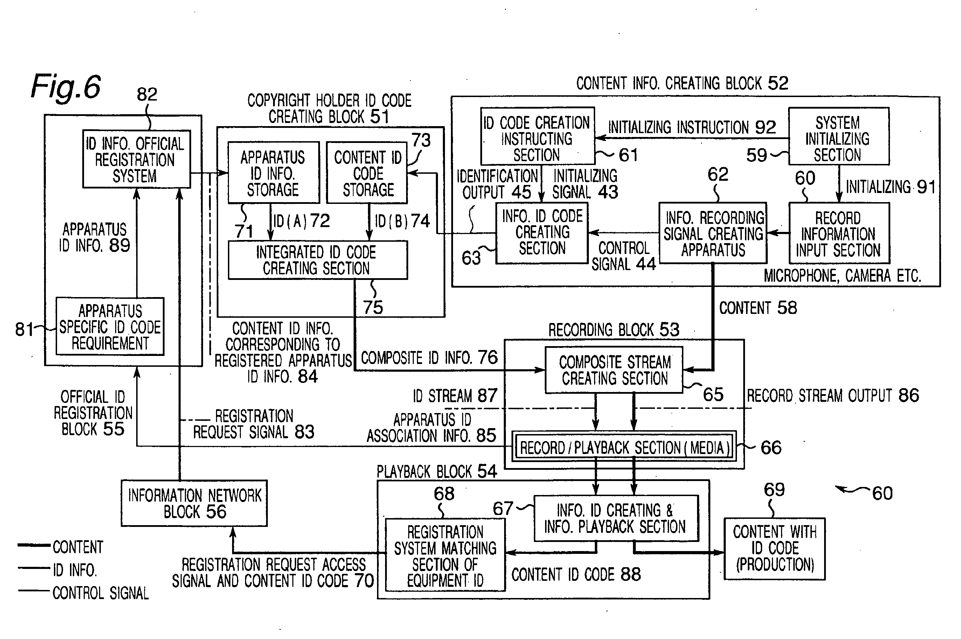

Fig. 6 is the block diagram of content distribution system 60 according to the second embodiment. The primary difference with content distribution system 10 (Fig. 2) is that official ID registration block 55 is newly provided. Official ID registration block 55 receives the request of the content producer and officially registers a apparatus-specific identification ID code specific to the apparatus as the apparatus identification information. The registered apparatus-specific identification ID code is transmitted to identification code creating block 51 which integrates it into the content identification information. The integrated identification information is added to the content as electronic watermark information in recording block 53.

In general, when created production such as image, music, etc. is filmed or recorded, a video camera with recording capabilities is used. It is a well-known technique to input filming information (also referred to as meta-information or meta-data) as header information of a stream during filming. In such event, a plurality of identification information and the official authentication procedures are required for respective item of meta-data of the content in order to make them effective in later legal contentions with respect to the copyright, etc. That is, for the content such as scenery, composite picture whose author cannot be identified, or for filming (underwater filming, etc.) that depends on the sensibility and skill of the cameraman, equipment and material must be identified, the photographer must be identified, and the copyright of the created production must be officially certified. The plurality of identification information correspond to the direct information related to the content such as names of a director, leading actor or actress, and/or scriptwriter of the content. On the other hand, with respect to the filming equipment and material, one or more codes to identify them is needed. Playback block 54, official ID registration block 55, and information network block 56 provide means for providing the code(s).

Now, description will be made on content distribution system 60. Content distribution system 60 includes identification code creating block 51, content information creating block 52, recording block 53, playback block 54, official ID registration block 55, and information network block 56. Though not indicated in the diagram, content distribution system 60 also includes user terminal 1 (Fig. 2) and bulletin board server 2 (Fig. 2). Because their functions and operations are the same as those described in the first embodiment, their description will be omitted.

Copyright holder identification code creating block 51 includes an apparatus identification information storage 71, content identification code storage 73, and integrated identification code creating section 75 apparatus identification information storage 71 is a memory of the apparatus registration ID number and stores the apparatus identification information registered at official ID registration block 55. Consequently, registered apparatus identification information ID (A) 72 is outputted from apparatus identification information storage 71. On the other hand, content identification code storage 73 is a memory of content ID, and stores the identification information of the produced content. The identification information of the content is, at least, the content identification code, and may include the content identification information in the first embodiment except for the apparatus identification information. Content identification code ID (B) 74 (or content identification information) is outputted from content identification code storage 73. Integrated identification code creating section 75 receives apparatus identification information ID (A) 72 as well as content identification information ID (B) 74 and adds the information to create the composite identification information (that is, content identification information shown in Fig. 3).

In content information creating block 52, system initializing section 59 transmits initializing signal 91 to record information input section 60, and also transmits initializing instruction signal 92 to identification code creation instructing section 61. Record information input section 60 obtains the content output signal via image/voice signal input terminal from camera, microphone, etc. and outputs to information recording signal creating apparatus 62. The input to information recording signal creating apparatus 62 automatically includes synchronous signal and added information of the content. Information recording signal creating apparatus 62 outputs control signal 44 when it extracts the added information. Control signal 44 is used as asynchronous signal to information identification code creating section 63 and identification output 45 is obtained. On the other hand, information recording signal creating apparatus 62 outputs digitized content information as content 58.

Composite stream creating section 65 of recording block 53 receives content 58 from information recording signal creating apparatus 62 and composite identification information 76 from integrated identification code creating section 75. Composite stream creating section 65 outputs two kinds of stream information.

One of the two kinds of stream information is storage stream output (content stream) 86, and the other is an identification code (identification stream) 87 with a synchronized relationship with respect to time or a predetermined relationship to the recording stream. In record/playback section 66 including a media, the information is accumulated and played back by linking stream inputs 86, 87 with respect to time via the recording media.

Information identification code creating and information playback section 67 obtains a content with identification code, that is, a created production with copyright identification code 69 from two kinds of streams obtained from record/playback section 66 (including media). Information identification creating and information playback section 67 outputs content identification code 88 containing the apparatus identification information which is the direct information of the equipment, etc. used for shooting as the input to the equipment ID registration system matching section 68.

Registration system matching section 68 of Content ID adds registration request signal internally created to the identification composite information, such as kind of equipment, owner, and outputs the registration request access signal and content identification code 70. The registration request access signal and content identification code 70 become an input to identification information official registration system 82 through information network block 56.

On the other hand, apparatus identification information 85 obtained from record/playback section 66 is transmitted to the apparatus specific identification ID code requirement 81, and is input to identification information official registration system 82 prior to the content information.

As for the example of official registration system 82, the electronic authentication institution which is a function of "content ID forum", and content ID issuance center (cIDf Specification 1.0, page 14 of material issued on May 31, 2000) can be utilized.

Information network block 56 may be a network open to the public, such as Internet or may be a specific dedicated line. The kind does not matter.

According to the configuration and the method as described above, it becomes possible to provide an apparatus and a system which can easily and securely record the copyright information certified and related to the content subject to be recorded.

In the above-mentioned description, official ID registration block 55 registers the apparatus identification information. However, the subject handled is not limited to the apparatus identification information but may be the content. identification information. By further registering the content identification information officially, the illegal copy can be definitely prevented.

The processing operation of each component element of respective content distribution systems described in the first and the second embodiments can be realized as a computer program for allowing the computer to execute such operation. Such computer program is recorded in optical discs such as CD, DVD, in magnetic recording medium such as floppy disks, and in semiconductor recording medium such as flash memory. In addition, such computer program is transmitted as electric signal over the network such as Internet.

### INDUSTRIAL APPLICABILITY

Whether a content is an illegal copy or legal copy is determined based on apparatus identification information for identifying an apparatus which recorded the content, and content identification information containing an identification code for identifying the content. Even if the illegal copy is made, the apparatus identification information is changed to the value corresponding to the apparatus, and the illegal copy can be easily determined. In such case, since the content reception and playback are stopped, the distribution of the illegal copy can be prevented. Since the apparatus that has made the illegal copy can be specified, it is possible to detect the person who made the illegal copy.

## Claims

1. A method for controlling distribution of content over the telecommunication network comprising:
adding apparatus identification information for identifying an apparatus by which the content is recorded and content identification information containing an identification code for identifying the content, to the content;
transmitting the content to the telecommunication network;
receiving at least one part of the content containing the apparatus identification information and the identification code over the telecommunication network;
extracting the apparatus identification information and the identification code from the received at least one part of the content;
judging whether the content is a legal copy or an illegal copy based on the apparatus identification information and the identification code extracted; and
stopping reception and playback of the content when the content is judged an illegal copy.

2. The method according to claim 1, wherein the judging judges whether the content is a legal copy or an illegal copy on the basis of the combination of the apparatus identification information and identification code extracted.

3. The method according to claim 2 further comprising receiving the apparatus identification information and identification code in advance,
wherein the judging judges that the content is legal copy when an combination of the apparatus identification information and the identification code received in advance is the same as an combination of the apparatus identification information and the identification code extracted, and judges an illegal copy when the combinations are different.

4. The method according to claim 3 further comprising posting the received at least one part of the content on the electronic bulletin board to disclose, when the content is judged to be an legal copy by the judging.

5. The method according to claim 4, wherein the content identification information further contains information for specifying a sender of the content, and the method further comprising requiring reception of the disclosed content on the basis of the information for specifying the sender.

6. The method according to claim 1 further comprising:
creating the content; and
creating the identification code for uniquely identifying the content,
wherein the adding adds the identification information and the created identification code, to the content as electronic watermark information.

7. The method according to claim 6, wherein the adding adds the identification information and the created identification code encoded in advance, to the content as electronic watermark information.

8. A content distribution control system over a telecommunication network comprising:
an identification information adder which adds, to the content, apparatus identification information for identifying an apparatus by which the content is recorded and content identification information containing an identification code for identifying the content to transmit to the telecommunication network;
an identification information extractor which receives at least one part of the content containing the apparatus identification information and the identification code from the identification information adder over the telecommunication network and extracts the apparatus identification information and identification code; and
a legality judging section which judges whether the content is a legal copy or an illegal copy on the basis of the apparatus identification information and identification code extracted by the identification information extractor, said legality judging section stopping reception and playback of the content when judging an illegal copy.

9. The content distribution control system according to claim 8, wherein the legality judging section judges whether the content is a legal copy or an illegal copy on the basis of the combination of the apparatus identification information and identification code extracted by the identification information extractor.

10. The content distribution control system according to claim 9,
wherein the identification information adder transmits the apparatus identification information and the identification code of the content in advance before the at least one part of the content is transmitted,
wherein the identification information extractor receives the apparatus identification information and the identification code transmitted from the identification information adder, and
wherein the legality judging section judges that the content is an legal copy when an combination of the apparatus identification information and the identification code received by the identification information extractor is the same as an combination of the identification code and the apparatus identification information later extracted by the identification information extractor, and judges that the content is an illegal copy when the combinations are different.

11. The content distribution control system according to claim 10 further comprising an electronic bulletin board which discloses the at least one part of the content when the legality judging section judges the content to be an legal copy.

12. The content distribution control system according to claim 11, wherein the content identification information further contains information for specifying a sender of the content, and the system further comprising a user terminal which requires reception of the content disclosed in the bulletin board on the basis of the information for specifying the sender.

13. The content distribution control system according to claim 8 further comprising:
a creating section which creates the content; and
an identification code creating section which creates the identification code that uniquely identifies the content,
wherein the identification information adder adds the identification information and the identification code created by the identification code creating section, to the content as electronic watermark information.

14. The content distribution control system according to claim 13, wherein the identification information adder adds the identification information and the created identification code encoded in advance, to the content as electronic watermark information.

15. A computer-executable program for controlling content distribution comprising:
receiving apparatus identification information for identifying an apparatus by which the content is recorded and identification code for identifying the content;
extracting the apparatus identification information and the identification code from the received content;
judging whether the content is a legal copy or an illegal copy based on the apparatus identification information and the identification code extracted; and
stopping reception and playback of the content when the content is judged an illegal copy.

16. The computer-executable program according to claim 15, wherein the judging judges whether the content is a legal copy or an illegal copy on the basis of the combination of the apparatus identification information and identification code extracted.

17. The computer-executable program according to claim 16 further comprising receiving the apparatus identification information and identification code in advance,
wherein the judging judges that the content is legal copy when an combination of the apparatus identification information and the identification code received in advance is the same as an combination of the apparatus identification information and the identification code extracted, and judges an illegal copy when the combinations are different.

18. The computer-executable program according to claim 17 further comprising posting the received at least one part of the content on the' electronic bulletin board to disclose, when the content is judged to be an legal copy by the judging.

19. The computer-executable program according to claim 15, wherein the extracting decodes and extracts the apparatus identification information and the identification code when the apparatus identification information and the identification code are encoded.

20. A recording medium that has recorded the computer-executable program according to claim 15.
